# EUROPÄISCHE PATENTANMELDUNG

(11) **EP 4 173 914 A1**
(43) Veröffentlichungstag der Anmeldung: **03.05.2023**
(21) Anmeldenummer: 22203262.5
(22) Anmeldetag: 24.10.2022
(51) Int. Cl.: B60W 30/12, B60W 60/00, B62D 6/00, B62D 15/00

(54) **VERFAHREN ZUR AUTOMATISCHEN SPURFÜHRUNG UND SPURFÜHRUNGSSYSTEM ZUR AUTOMATISCHEN SPURFÜHRUNG EINES FAHRZEUGS**

(30) Priorität: 28.10.2021 DE 102021128178
(71) Anmelder: KNORR-BREMSE Systeme für Nutzfahrzeuge GmbH, 80809 München (DE)
(72) Erfinder: FLUMM, Simon, 75446 Wiernsheim (DE); Schmortte, Birgit, 80809 München (DE)

(57) **Zusammenfassung**

Die Erfindung betrifft ein Verfahren zur automatischen Spurführung eines Fahrzeugs (100), welches wenigstens zwei Räder auf jeder Fahrzeugseite sowie ein Spurführungssystem (4) aufweist, mit welchem wenigstens eine Spurrinne (10, 11) innerhalb einer Fahrspur (2, 3) erkannt werden kann, wobei bei dem Verfahren abhängig von einem Erkennen wenigstens einer Spurrinne (10, 11) die Spurführung des Fahrzeugs (100) beeinflusst werden kann, wobei das Spurführungssystem (4) einen Spurrinnenfolge-Modus aufweist, bei welchem für den Fall, dass wenigstens eine Spurrinne (10, 11) erkannt worden ist, die Spurführung des Fahrzeugs (100) von dem Spurführungssystem (4) derart beeinflusst wird, dass das Fahrzeug (100) der wenigstens einen erkannten Spurrinne (10, 11) folgt, indem wenigstens zwei Räder an wenigstens einer Fahrzeugseite in Überdeckung mit der wenigstens einen erfassten Spurrinne (10, 11) gebracht werden. Dadurch soll eine bessere Fahrstabilität des Fahrzeugs (100) erzielt werden, indem vor allem beim Befahren von Kurven die Räder des Fahrzeugs (100) durch die Spurrillen (10, 11) geführt werden.

## Beschreibung

Die Erfindung geht aus von einem Verfahren zur automatischen Spurführung eines Fahrzeugs gemäß dem Oberbegriff von Anspruch 1 und von einem Spurführungssystem zur automatischen Spurführung eines Fahrzeugs gemäß dem Oberbegriff von Anspruch 6. Weiterhin geht die Erfindung auch von einem Fahrzeug gemäß dem Oberbegriff von Anspruch 15 aus.

Spurrinnen sind Straßenschäden in Form von in Fahrspurlängsrichtung verlaufenden Fahrspurvertiefungen. Diese entstehen vor allem durch Eindrücken und Verdichten des Asphalts einer Fahrbahn infolge einer Einwirkung von vergleichsweise hohen Radlasten des Schwerlastverkehrs. Um einen solchen Fahrbahnverschleiß in Form von Spurrinnen zu vermeiden, schlägt die DE 10 2017 009 446 A1 ein gattungsbildendes Verfahren, ein gattungsbildendes Spurführungssystem sowie ein hoch automatisiert oder autonom fahrendes Fahrzeug mit einem solchen Spurführungssystem vor, bei dem eine gleichmäßige Befahrung von Fahrbahnen erzielt werden soll, insbesondere dadurch, dass die Fahrbahnen durch Fahrzeuge mit einem einheitlichen oder individuellen Versatz zu einem in der Vergangenheit durch eine höchste Nutzung gekennzeichneten Fahrbahnabschnitt befahren werden.

Der Erfindung liegt die Aufgabe zugrunde, ein Verfahren, ein Spurführungssystem und ein Fahrzeug zur Verfügung zu stellen, mit welchem die Fahrsicherheit gesteigert werden kann.

Diese Aufgabe wird erfindungsgemäß durch die Merkmale der Ansprüche 1, 6 und 15 gelöst.

### Offenbarung der Erfindung

Die Erfindung hat erkannt, dass ein Befahren von Spurrillen durch Räder eines Fahrzeugs eine bessere Fahrstabilität mit sich bringt, indem dadurch vor allem beim Befahren von Kurven die Räder des Fahrzeugs durch die Spurrillen geführt werden. Infolge der verbesserten Führung des Fahrzeugs durch die Spurrillen nimmt die Tendenz zum Über- oder Untersteuern ab. Nicht zuletzt werden durch Spurrinnen auch Fahrtrajektorien markiert, welche der zeitlich vorangegangene Verkehr als günstig oder optimal im Sinne einer Ideallinie ausgewählt hat, um beispielsweise Kurven zügig, aber sicher zu durchfahren.

Gemäß einem ersten Aspekt der Erfindung wird deshalb ein Verfahren zur automatischen Spurführung eines Fahrzeugs vorgeschlagen, welches wenigstens zwei Räder auf jeder Fahrzeugseite sowie ein Spurführungssystem aufweist, mit welchem wenigstens eine Spurrinne innerhalb einer Fahrspur erkannt werden kann, wobei bei dem Verfahren abhängig von einem Erkennen wenigstens einer Spurrinne die Spurführung des Fahrzeugs beeinflusst werden kann, wobei das Spurführungssystem einen Spurrinnenfolge-Modus aufweist, bei welchem für den Fall, dass wenigstens eine Spurrinne erkannt worden ist, die Spurführung des Fahrzeugs von dem Spurführungssystem derart beeinflusst wird, dass das Fahrzeug der wenigstens einen erkannten Spurrinne folgt, indem wenigstens zwei Räder an wenigstens einer Fahrzeugseite in Überdeckung mit der wenigstens einen erfassten Spurrinne gebracht werden

Gemäß einem zweiten Aspekt der Erfindung wird weiterhin ein Spurführungssystem zur automatischen Spurführung eines Fahrzeugs vorgeschlagen, welches wenigstens zwei Räder auf jeder Fahrzeugseite aufweist, wobei das Spurführungssystem einen Spurrinnenfolge-Modus sowie wenigstens Folgendes umfasst:
a) Eine Steuer- oder Regeleinrichtung,
b) eine Sensoreinrichtung, welche ausgebildet ist, dass sie Fahrzeugumgebungsparameter erfassen und unter den erfassten Fahrzeugumgebungsparametern wenigstens eine Spurrinne innerhalb einer Fahrspur erkennen kann und bei einem Erkennen wenigstens einer Spurrinne Spurrinnen-Erkennungssignale erzeugt und in die Steuer- oder Regeleinrichtung einsteuert,
c) wenigstens einen von der Steuer- oder Regeleinrichtung abhängig von den erfassten Fahrzeugumgebungsparameter gesteuerten oder geregelten Aktuator, welcher die Spurführung des Fahrzeugs beeinflusst, wobei
d) die Steuer- oder Regeleinrichtung ausgebildet ist, dass sie des Spurführungssystems den wenigstens einen Aktuator abhängig von den Spurrinnen-Erkennungssignalen steuert oder regelt, und wobei
e) das Spurführungssystem einen Spurrinnenfolge-Modus aufweist, und dass
f) die Steuer- oder Regeleinrichtung weiterhin ausgebildet ist, dass sie im Spurrinnenfolge-Modus den wenigstens einen Aktuator bei einem Empfang von Spurrinnen-Erkennungssignalen derart steuert oder regelt, dass das Fahrzeug der wenigstens einen erkannten Spurrinne folgt, indem wenigstens zwei Räder an wenigstens einer Fahrzeugseite in Überdeckung mit der wenigstens einen erfassten Spurrinne gebracht werden.

Mit anderen Worten sorgt das erfindungsgemäße Verfahren bzw. das erfindungsgemäße Spurführungssystem dafür, dass das Fahrzeug mit wenigstens zwei Rädern verschiedener Achsen, die auf der gleichen Fahrzeugseite angeordnet sind, bewusst in einer erkannten oder erfassten Spurrille wenigstens teilautonom oder autonom geführt wird.

Der Aktuator ist bevorzugt eine Lenkeinrichtung des Fahrzeugs. Alternativ oder zusätzlich könnte der Aktuator aber auch eine Bremseinrichtung, mit welcher ein Lenkbremsen ermöglicht wird.

Weiterhin kann der Spurrinnenfolge-Modus des Spurführungssystems unter mehreren Modi zur Spurführung des Fahrzeugs auswählbar sein. Die Auswahl kann dabei beispielsweise über eine Mensch-/Maschine- Schnittstelle durch einen Fahrer des Fahrzeugs oder automatisch getroffen werden, insbesondere dann, wenn wenigstens eine Spurrinne auf der Fahrbahn erkannt wird.

Durch die in den Unteransprüchen angegebenen Merkmale sind vorteilhafte Fortbildungen der Erfindung definiert.

Gemäß einer Fortbildung des Verfahrens erfolgt für den Fall, dass von dem Spurführungssystem keine Spurrinne erkannt worden ist oder in einem von dem Spurrinnenfolge-Modus abweichenden Modus des Spurführungssystems, die automatische Spurführung des (Ego-)Fahrzeugs durch das Spurführungssystem auf der Basis von erfassten Fahrzeugumgebungsparametern, welche sich von einer erkannten Spurrinne unterscheiden. Bei solchen Fahrzeugumgebungsparametern kann es sich um jegliche Parameter handeln, welche die Umgebung des (Ego- )Fahrzeugs definieren, wie beispielsweise weitere statische oder dynamische Hindernisse, Objekte oder weitere Fahrzeuge, der Abstand, die Relativgeschwindigkeit, die Relativbeschleunigung in Bezug zu Hindernissen, Objekten oder weiteren Fahrzeugen, Fahrbahnmarkierungen, Fahrspurmarkierungen, Verkehrszeichen, die Umgebungstemperatur, die relative Luftfeuchtigkeit in der Umgebung des Fahrzeugs, Verkehrszeichen, die Helligkeit in der Umgebung des Fahrzeugs, der Verlauf der Fahrspur und/oder der Fahrbahn, auf welcher sich das (Ego-)Fahrzeug bewegt usw..

Gemäß einer Weiterbildung des Verfahrens wird für den Fall, dass von dem Spurführungssystem insbesondere im Spurrinnenfolge-Modus zwei im wesentlichen parallele Spurrinnen innerhalb einer Fahrspur erkannt worden sind, nämlich eine erste Spurrinne und eine zweite Spurrinne, die Spurführung des Fahrzeugs von dem Spurführungssystem derart beeinflusst, dass das Fahrzeug den beiden erkannten Spurrinnen folgt, indem wenigstens zwei Räder auf einer ersten Fahrzeugseite in Überdeckung mit der ersten erkannten Spurrinne und wenigstens zwei Räder auf der zweiten Fahrzeugseite in Überdeckung mit der zweiten erkannten Spurrinne gebracht werden. Vorzugsweise kommt diese Ausführung des Verfahrens nur zum Einsatz, wenn die Spurbreite des Fahrzeugs in etwa der Spurbreite der Spurrinnen entspricht. Auf diese Weise wird die Spurführung des Fahrzeugs weiter verbessert, weil dann wenigstens vier Räder des (Ego- )Fahrzeugs durch Spurrinnen geführt werden.

Auch kann das Spurführungssystem das Fahrzeug derart steuern oder regeln, dass das Fahrzeug nur dann der wenigstens einen erkannten Spurrinne folgt, wenn das Spurführungssystem erkannt hat, dass sich die wenigstens eine Spurrinne innerhalb einer Fahrspur befindet und das Fahrzeug sich beim Folgen der wenigstens einer Spurrinne innerhalb von Fahrspurbegrenzungen der Fahrspur bewegt. Wenn etwa eine Fahrbahn im Laufe der Zeit in ihrem Verlauf umgebaut worden ist, aber die davor ausgebildeten Spurrillen noch vorhanden sind, wird dadurch verhindert, dass das (Ego-)Fahrzeug beim Folgen der wenigstens einen Spurrinne die Fahrspur oder die Fahrbahn verlässt.

Darüber hinaus kann bei dem Verfahren auch vorgesehen sein, dass das Spurführungssystem eine nasse Fahrbahn einer Fahrspur erkennt und die Spurführung des Fahrzeugs nur dann beeinflusst, um der wenigstens einen erfassten Spurrinne zu folgen, wenn es keine nasse Fahrbahn oder eine trockene Fahrbahn erkannt hat. Dadurch werden negative Aquaplaning-Effekte vermieden.

Gemäß einer Fortbildung des Spurführungssystems kann dieses ausgebildet sein, dass für den Fall, dass von der Sensoreinrichtung keine Spurrinnen-Erkennungssignale erzeugt worden sind oder in einem von dem Spurrinnenfolge-Modus abweichenden Modus des Spurführungssystems die Steuereinrichtung den wenigstens einen Aktuator derart steuert, dass die automatische Spurführung des Fahrzeugs auf der Basis von durch die Sensoreinrichtung erfassten Fahrzeugumgebungsparametern vornimmt, welche sich von einer erkannten Spurrinne unterscheiden.

Auch kann das Spurführungssystem ausgebildet sein, dass für den Fall, dass insbesondere im Spurrinnenfolge-Modus von der Sensoreinrichtung zwei im wesentlichen parallele Spurrinnen innerhalb einer Fahrspur erkannt worden sind, nämlich eine erste Spurrinne und eine zweite Spurrinne, und entsprechende Spurrinnen-Erkennungssignale in die Steuer- oder Regeleinrichtung eingesteuert worden sind, die Steuer- oder Regeleinrichtung den wenigstens einen Aktuator derart steuert, dass das Fahrzeug den beiden erkannten Spurrinnen folgt, indem wenigstens zwei Räder auf einer ersten Fahrzeugseite in Überdeckung mit der ersten erkannten Spurrinne und wenigstens zwei Räder auf der zweiten Fahrzeugseite in Überdeckung mit der zweiten erkannten Spurrinne gebracht werden.

Bei dem Spurführungssystem kann die Steuer- oder Regeleinrichtung ausgebildet sein, dass sie insbesondere im Spurrinnenfolge-Modus den wenigstens einen Aktuator bei einem Empfang von Spurrinnen-Erkennungssignalen derart steuert oder regelt, dass das Fahrzeug nur dann der wenigstens einen erkannten Spurrinne folgt, wenn die Sensoreinrichtung erkannt hat, dass sich die wenigstens eine Spurrinne innerhalb einer Fahrspur befindet und das Fahrzeug sich beim Folgen der wenigstens einer Spurrinne innerhalb von Fahrspurbegrenzungen der Fahrspur bewegt.

Auch kann bei dem Spurführungssystem die Sensoreinrichtung ausgebildet sein, dass sie insbesondere im Spurrinnenfolge-Modus eine nasse Fahrbahn erkennen und entsprechende Nass-Erkennungssignale in die Steuer- oder Regeleinrichtung einsteuern kann, wobei die Steuer- oder Regeleinrichtung ausgebildet ist, dass sie den wenigstens einen Aktuator bei einem gleichzeitigen Empfang von Nass-Erkennungssignalen und von Spurrinnen-Erkennungssignalen derart steuert oder regelt, dass das die Räder des Ego-Fahrzeugs einen Versatz gegenüber der (den) erkannten Spurrinne(n) aufweisen.

Bei dem Spurführungssystem kann der Aktuator beispielsweise eine Lenkeinrichtung des Fahrzeugs und die Sensoreinrichtung eine Bilderfassungseinrichtung mit wenigstens einer Kamera umfassen. Weiterhin kann das Spurführungssystem ausgebildet sein, dass es eine teilautonome oder autonome Spurführung des Fahrzeugs ausführt.

Die Erfindung schlägt nicht zuletzt ein Fahrzeug vor, welches ein oben beschriebenes Spurführungssystem aufweist.

### Zeichnung

Ein Ausführungsbeispiel der Erfindung ist in der Zeichnung dargestellt und in der nachfolgenden Beschreibung näher erläutert. In der Zeichnung zeigt
- Fig. 1: ein Fahrzeug mit einer bevorzugten Ausführungsform eines Spurführungssystems gemäß der Erfindung;
- Fig. 2: einen Ablaufplan einer bevorzugten Ausführungsform eines Verfahrens zur automatischen Spurführung des Fahrzeugs.

### Beschreibung des Ausführungsbeispiels

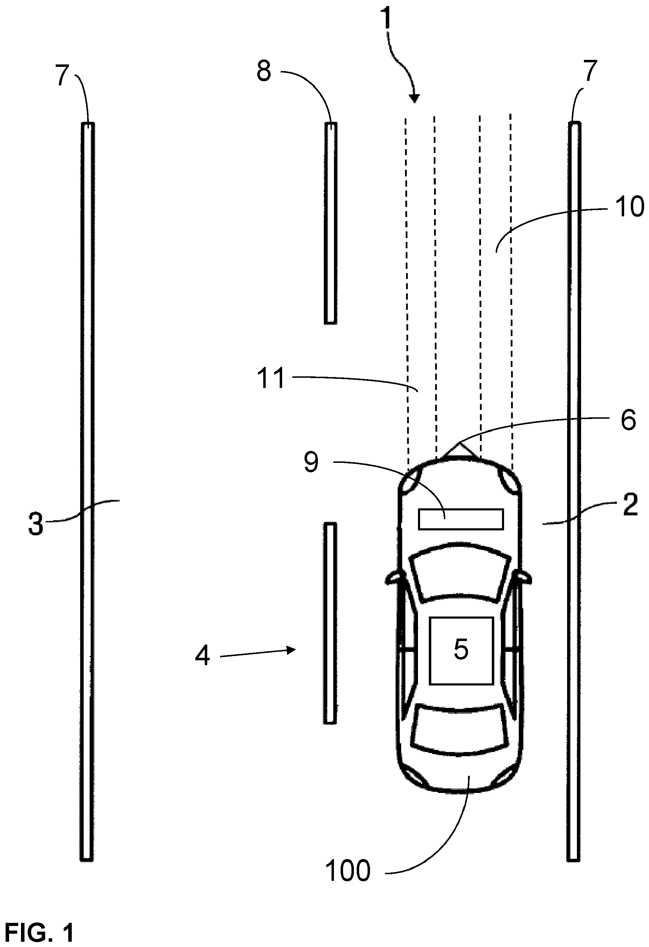

Fig. 1 zeigt eine schematische Darstellung eines Ego-Fahrzeugs 100, welches mit einer bevorzugten Ausführungsform eines Spurführungssystems 4 gemäß der Erfindung ausgestattet ist und sich auf einer hier beispielsweise zweispurigen Fahrbahn 1 mit zwei Fahrspuren, einer rechten Fahrspur 2 und einer linken Fahrspur 3 auf der rechten Fahrspur 2 beispielsweise von einer Steuer- oder Regeleinrichtung 5 teilautonom oder autonom gesteuert bewegt. Das Spurführungssystem 4 ist beispielsweise als On-Board-System vollständig auf dem Ego-Fahrzeug 100 angeordnet und bildet einen Bestandteil der teilautonomen oder autonomen Steuerung/Regelung des Ego-Fahrzeugs 100. Alternativ könnte das Spurführungssystem 4 auch ein verteiltes System darstellen, wobei Teile des Spurführungssystems 4 auch in einer externen Einheit angeordnet sein können.

Das Spurführungssystem 4 weist als Sensoreinrichtung beispielsweise eine Bilderfassungseinrichtung 6 hier beispielsweise in Form einer Kamera auf, insbesondere in Form einer Stereokamera, deren Erfassungsbereich vor das Ego-Fahrzeug 100 gerichtet ist. Die Bilderfassungseinrichtung 6 erfasst fortlaufend Signale, die der Steuer- oder Regeleinheit 5 zugeführt werden. Alternativ oder zusätzlich können auch ein oder mehrere andere geeignete Sensoreinrichtungen verwendet werden, welche Fahrzeugumgebungsparameter des Ego-Fahrzeugs 100 erfassen können.

Die Fahrbahn 1 umfasst zwei Fahrbahnbegrenzungen 7, welche hier beispielsweise auch jeweils eine Fahrspurbegrenzung der rechten und linken Fahrspur 2, 3 ausbilden. Weiterhin ist ein hier gestrichelt dargestellte Mittellinie 8 zwischen der rechten und linken Fahrspur 2, 3 vorhanden, welche ebenfalls eine Fahrspurbegrenzung der rechten und linken Fahrspur 2, 3 ausbildet. Die Bilderfassungseinrichtung 6 kann die Fahrbahnbegrenzungen 7 und die Mittellinie 8 bzw. die Fahrspurbegrenzungen 7, 8 erfassen und als solche erkennen. Weiterhin ist die Bilderfassungseinrichtung 6 auch in der Lage, Spurrinnen 10, 11 auf oder in der Fahrbahn 1 bzw. auf oder in der gerade befahrenen Fahrspur 2 beispielsweise als Vertiefungen im Fahrbahnbelag zu erkennen.

Zusätzlich kann die Bilderfassungseinrichtung 6 weitere Fahrzeugumgebungsparameter des Ego-Fahrzeugs 100 erfassen, welche die Umgebung des Ego-Fahrzeugs 100 definieren, wie beispielsweise statische oder dynamische Hindernisse, Objekte oder wie hier ein weiteres, beispielsweise vorausfahrendes Fahrzeug, den Abstand, die Relativgeschwindigkeit, die Relativbeschleunigung in Bezug zu Hindernissen, Objekten und/oder zu dem weiteren Fahrzeug, Verkehrszeichen und die Helligkeit in der Umgebung des Ego-Fahrzeugs 100.

Die Steuer- oder Regeleinrichtung 5 umfasst hier beispielsweise einen Autopiloten, mit dem das Ego-Fahrzeug 100 teilautonom oder autonom gesteuert werden kann. Abhängig von den von der Bilderfassungseinrichtung 6 ausgesteuerten Sensorsignalen ermittelt die Steuer- oder Regeleinrichtung 5 hier beispielsweise eine Soll-Fahrtrajektorie für das Ego-Fahrzeug 100 entlang der hier beispielsweise rechten Fahrspur 2. Insbesondere umfasst die Steuer- oder Regeleinrichtung 5 eine Spurhaltelogik und ermittelt unter anderem einen Soll-Lenkwinkel, um das Ego-Fahrzeug 100 entlang der Soll-Fahrtrajektorie, hier innerhalb der rechten Fahrspur 2 zu führen. Dieser Soll-Lenkwinkel wird dann in eine Lenkeinrichtung 9 des Ego-Fahrzeugs 100 eingesteuert, um lenkbare Räder einer lenkbaren Achse des Ego-Fahrzeugs 100 entsprechend dem Soll-Lenkwinkel auszurichten. Beispielsweise mittels eines Lenkwinkelsensors kann dann der Ist-Lenkwinkel ermittelt und von der Steuer- oder Regeleinrichtung 5 auf den Soll-Lenkwinkel ausgeregelt werden.

Das Spurführungssystem 4 weist insbesondere einen unter mehreren Modi auswählbaren Spurrinnenfolge-Modus auf, welcher beispielsweise über eine Mensch-/Maschine-Schnittstelle wie eine Bedieneinrichtung auswählbar bzw. aktivierbar oder deaktivierbar ist.

Beispielsweise die Bilderfassungseinrichtung 6 umfasst einen Auswertealgorithmus, welcher insbesondere im Spurrinnenfolge-Modus in der Lage ist, anhand der Sensorsignale eine Spurrinne 10, 11 auf oder in der Fahrbahn 1 und hier insbesondere in oder auf der rechten Fahrspur 2 zu erkennen. Bei einer erkannten oder erfassten Spurrinne 10, 11 auf oder in der rechten Fahrspur 2 steuert dann die Bilderfassungseinrichtung 6 Spurrinnen-Erkennungssignale in die Steuer- oder Regeleinrichtung 5 ein, welche daraufhin insbesondere im Spurrinnenfolge-Modus die Lenkeinrichtung 9 derart steuert oder regelt, dass das Ego-Fahrzeug 100 der erkannten Spurrinne 10, 11 folgt, indem hier beispielsweise zwei Räder an wenigstens einer Fahrzeugseite in Überdeckung mit der erfassten Spurrinne 10, 11 gebracht werden.

In dem anderen Fall, in welchem von der Bilderfassungseinrichtung 6 insbesondere im Spurrinnenfolge-Modus keine Spurrinne 10, 11 erkannt wird, wird der Spurrinnenfolge-Modus beispielsweise verlassen und die automatische Spurführung des Ego-Fahrzeugs 100 erfolgt dann beispielsweise durch das Spurführungssystem 4 auf der Basis von erfassten Fahrzeugumgebungsparametern, welche sich von einer erkannten Spurrinne 10, 11 unterscheiden und beispielsweise oben aufgeführt sind.

Falls wie hier in **Fig. 1** gezeigt, zwei Spurrinnen, eine rechte Spurrinne 10 und eine linke Spurrinne 11 erfasst und erkannt werden und falls die Spurbreite des Ego-Fahrzeugs 100 im Wesentlichen der Spurbreite der beiden Spurrinnen 10, 11 entspricht, was die Bilderfassungseinrichtung 6 erfassen und erkennen kann, so kann die Steuer- oder Regeleinrichtung 5 die Lenkeinrichtung 9 auch derart steuert oder regeln, dass das Ego-Fahrzeug 100 den erkannten Spurrinnen 10, 11 folgt, indem hier die zwei Räder an der rechten Fahrzeugseite in Überdeckung mit der erfassten rechten Spurrinne 10 und die zwei Räder an der linken Fahrzeugseite in Überdeckung mit der erfassten linken Spurrinne 11 gebracht werden. Die Spurhaltelogik des Spurführungssystems 4 führt das Ego-Fahrzeug 100 unter der Kenntnis seiner Breite und Spurweite bevorzugt derart, dass das Ego-Fahrzeug 100 dabei vollständig in der rechten Fahrspur 2 gehalten wird. Sollte die Spurrinne 10 oder 11 oder die Spurrinnen nach außerhalb der Fahrspur 2 führen, was der Fall sein kann, wenn beispielsweise die Fahrbahn 1 in Ihrem Verlauf umgebaut worden ist, aber in der Fahrspur noch alte Spurrinnen 10, 11 vorhanden sind, so wird ein solches Verlassen der Fahrbahn 1 durch die Spurrinnen 10, 11 von der Bilderfassungseinrichtung 6 erfasst und erkannt und dann durch die Steuer- oder Regeleinrichtung ein weiteres Folgen der Spurrinnen 10, 11 durch das Ego-Fahrzeug unterbunden, indem dann beispielsweise der Spurrinnenfolge-Modus automatisch verlassen wird.

Auch ist bei dem bevorzugten Spurführungssystem 4 die Bilderfassungseinrichtung 6 ausgebildet, dass sie eine nasse Fahrbahn 1 erkennen und entsprechende Nass-Erkennungssignale in die Steuer- oder Regeleinrichtung 5 einsteuern kann. Die Steuer- oder Regeleinrichtung 5 kann ausgebildet sein, dass sie bei einem gleichzeitigen Empfang von Spurrinnen-Erkennungssignalen und von Nass-Erkennungssignalen die Lenkeinrichtung 9 derart steuert oder regelt, dass die Räder, hier die Räder auf der rechten Fahrzeugseite und die Räder der linken Fahrzeugseite des Ego-Fahrzeugs 100 jeweils einen Versatz gegenüber den beiden erkannten Spurrinnen 10, 11 aufweisen, um der dann vorhandenen Aqua-Planing-Gefahr zu begegnen. Alternativ kann bei einem gleichzeitigen Empfang von Spurrinnen-Erkennungssignalen und von Nass-Erkennungssignalen die Steuer- oder Regeleinrichtung 5 ausgebildet sein, dass der Spurrinnenfolge-Modus automatisch verlassen wird.

Wenn beispielsweise das Ego-Fahrzeug 100 von der Steuer- oder Regeleinrichtung 5 zunächst bei trockenem Wetter im Spurrinnenfolgemodus gesteuert worden ist, so dass es den beiden Spurrinnen 10, 11 folgt, aber im Laufe der Fahrt Regen einsetzt, welcher für eine nasse Fahrbahn 1 sorgt, d.h. bei einem Übergang von einer trockenen auf eine nasse oder feuchte Fahrbahn 1 im Laufe der Fahrt, so kann die Soll-Fahrtrajektorie des Ego-Fahrzeugs 100 dahingehend geändert werden, dass die Räder auf der rechten Fahrzeugseite und die Räder der linken Fahrzeugseite des Ego-Fahrzeugs 100 jeweils einen Versatz gegenüber den beiden erkannten und durch Wasser gefüllten Spurrinnen 10, 11 aufweisen. Alternativ kann in einer solchen Situation auch der Spurrinnenfolge-Modus automatisch verlassen werden. Diese Ausnahmen widersprechen jedoch nicht der Strategie, dass das Ego-Fahrzeug 100 im Spurrinnenfolge-Modus grundsätzlich mit wenigstens zwei Rädern einer Fahrzeugseite in einer Spurrinne 10, 11 fahren sollte.

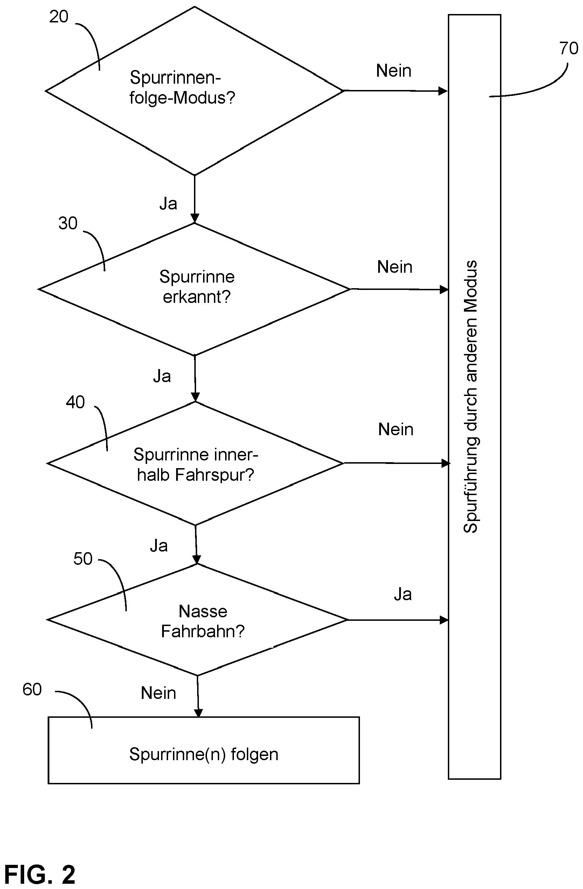

**Fig. 2** zeigt einen Ablaufplan einer bevorzugten Ausführungsform eines Verfahrens zur automatischen Spurführung des Ego-Fahrzeugs 100 durch das oben beschriebene Spurführungssystem 4. Das Verfahren ist in einer Routine implementiert, welche beispielsweise in einem Speicher der Steuer- oder Regeleinrichtung 5 abgespeichert ist.

In einem Schritt 20 wird abgefragt, ob der Spurrinnenfolge-Modus beispielsweise über die Mensch-/Maschine-Schnittstelle aktiviert worden ist. Falls dies nicht der Fall ist ("Nein"), so erfolgt die Spurführung des Ego-Fahrzeugs 100 durch einen anderen Modus des Spurführungssystems 4 gemäß Schritt 70.

Falls dies aber der Fall ist ("Ja"), so wird in einer weiteren Abfrage gemäß Schritt 30 abgefragt, ob durch die Bilderfassungseinrichtung 6 eine Spurrinne oder mehrere Spurrinnen 10, 11 beispielhaft bezogen auf **Fig. 1** hier auf oder in der rechten Fahrspur 2 erkannt worden sind. Falls dies nicht der Fall ist ("Nein"), so wird beispielsweise der Spurrinnenfolge-Modus automatisch beendet und die Spurführung des Ego-Fahrzeugs 100 erfolgt durch einen anderen Modus des Spurführungssystems 4 gemäß Schritt 70.

Falls dies aber der Fall ist ("Ja"), so wird der Spurrinnenfolge-Modus fortgesetzt und in einer weiteren Abfrage gemäß Schritt 40 abgefragt, ob die Spurrinne 10, 11 insbesondere in ihrem weiteren Verlauf (weiterhin) innerhalb der Fahrspur 2 verläuft oder etwa aus der Fahrspur 2 herausläuft. Falls festgestellt worden ist, dass die Spurrinne 10, 11 in ihrem weiteren Verlauf aus der Fahrspur 2 herausläuft ("Nein"), so wird beispielsweise der Spurrinnenfolge-Modus automatisch beendet und die Spurführung des Ego-Fahrzeugs 100 erfolgt durch einen anderen Modus des Spurführungssystems 4 gemäß Schritt 70.

Falls dies aber der Fall ist ("Ja"), d.h. die Spurrinne 10, 11 verläuft (weiterhin) innerhalb der Fahrspur 2, so wird der Spurrinnenfolge-Modus fortgesetzt und in einer weiteren Abfrage gemäß Schritt 50 abgefragt, ob die Fahrbahn nass ist. Falls dies der Fall ist ("Ja"), so hat die Bilderfassungseinrichtung auf eine nasse Fahrbahn 1 oder Fahrspur 4 erkannt, so dass Aquaplaning-Gefahr besteht und deshalb beispielsweise der Spurrinnenfolge-Modus automatisch beendet wird und die (weitere) Spurführung des Ego-Fahrzeugs 100 durch einen anderen Modus des Spurführungssystems 4 gemäß Schritt 70 erfolgt.

Falls dies aber nicht der Fall ist ("Nein"), so hat die Bilderfassungseinrichtung keine nasse Fahrbahn 1 oder Fahrspur 4 bzw. eine trockene Fahrbahn 1 oder Fahrspur 4 erkannt, so dass keine Aquaplaning-Gefahr besteht und deshalb der Spurrinnenfolge-Modus fortgesetzt wird, wobei hierzu in einem Schritt 60 das Ego-Fahrzeug 100 der erkannten Spurrinne 10, 11 folgt. Es ist klar, dass die Reihenfolge der Schritte 40 und 50 auch vertauscht werden kann.

### Bezugszeichenliste

- 1: Fahrbahn
- 2: rechte Fahrspur
- 3: linke Fahrspur
- 4: Spurführungssystem
- 5: Steuer- oder Regeleinrichtung
- 6: Bilderfassungseinrichtung
- 7: Fahrbahnbegrenzungen
- 8: Mittellinie
- 9: Lenkeinrichtung
- 10: rechte Spurrinne
- 11: linke Spurrinne
- 20-70: Verfahrensschritte
- 100: Ego-Fahrzeug

## Patentansprüche

1. Verfahren zur automatischen Spurführung eines Fahrzeugs (100), welches wenigstens zwei Räder auf jeder Fahrzeugseite sowie ein Spurführungssystem (4) aufweist, mit welchem wenigstens eine Spurrinne (10, 11) innerhalb einer Fahrspur (2, 3) erkannt werden kann, wobei bei dem Verfahren abhängig von einem Erkennen wenigstens einer Spurrinne (10, 11) die Spurführung des Fahrzeugs (100) beeinflusst werden kann, **dadurch gekennzeichnet, dass** das Spurführungssystem (4) einen Spurrinnenfolge-Modus aufweist, bei welchem für den Fall, dass wenigstens eine Spurrinne (10, 11) erkannt worden ist, die Spurführung des Fahrzeugs (100) von dem Spurführungssystem (4) derart beeinflusst wird, dass das Fahrzeug (100) der wenigstens einen erkannten Spurrinne (10, 11) folgt, indem wenigstens zwei Räder an wenigstens einer Fahrzeugseite in Überdeckung mit der wenigstens einen erfassten Spurrinne (10, 11) gebracht werden.

2. Verfahren nach Anspruch 1, **dadurch gekennzeichnet, dass** für den Fall, dass von dem Spurführungssystem (4) keine Spurrinne (10, 11) erkannt worden ist oder in einem von dem Spurrinnenfolge-Modus abweichenden Modus des Spurführungssystems (4), die automatische Spurführung des Fahrzeugs (100) durch das Spurführungssystem (4) auf der Basis von erfassten Fahrzeugumgebungsparametern erfolgt, welche sich von einer erkannten Spurrinne (10, 11) unterscheiden.

3. Verfahren nach Anspruch 1 oder 2, **dadurch gekennzeichnet, dass** für den Fall, dass von dem Spurführungssystem (4) zwei im wesentlichen parallele Spurrinnen (10, 11) innerhalb einer Fahrspur erkannt worden sind, nämlich eine erste Spurrinne (10) und eine zweite Spurrinne (11), die Spurführung des Fahrzeugs (100) von dem Spurführungssystem (4) derart beeinflusst wird, dass das Fahrzeug (100) den beiden erkannten Spurrinnen (10, 11) folgt, indem wenigstens zwei Räder auf einer ersten Fahrzeugseite in Überdeckung mit der ersten erkannten Spurrinne (10) und wenigstens zwei Räder auf der zweiten Fahrzeugseite in Überdeckung mit der zweiten erkannten Spurrinne (12) gebracht werden.

4. Verfahren nach einem der vorhergehenden Ansprüche, **dadurch gekennzeichnet, dass** Spurführungssystem (4) das Fahrzeug (100) im Spurrinnenfolge-Modus derart steuert oder regelt, dass das Fahrzeug (100) nur dann der wenigstens einen erkannten Spurrinne (10, 11) folgt, wenn das Spurführungssystem (4) erkannt hat, dass sich die wenigstens eine Spurrinne (10, 11) innerhalb einer Fahrspur (2) befindet und das Fahrzeug (100) sich beim Folgen der wenigstens einer Spurrinne (10, 11) innerhalb von Fahrspurbegrenzungen (7, 8) der Fahrspur (2) bewegt.

5. Verfahren nach einem der vorhergehenden Ansprüche, **dadurch gekennzeichnet, dass** das Spurführungssystem (4) im Spurrinnenfolge-Modus eine nasse Fahrbahn erkennt und die Spurführung des Fahrzeugs (100) nur dann beeinflusst, um der wenigstens einen erfassten Spurrinne (10, 11) zu folgen, wenn es keine nasse Fahrbahn erkannt hat.

6. Spurführungssystem (4) zur automatischen Spurführung eines Fahrzeugs (100), welches wenigstens zwei Räder auf jeder Fahrzeugseite aufweist, umfassend wenigstens Folgendes:
a) Eine Steuer- oder Regeleinrichtung (5),
b) eine Sensoreinrichtung (6), welche ausgebildet ist, dass sie Fahrzeugumgebungsparameter erfassen und unter den erfassten Fahrzeugumgebungsparametern wenigstens eine Spurrinne (10, 11) innerhalb einer Fahrspur (2) erkennen kann und bei einem Erkennen wenigstens einer Spurrinne (10, 11) Spurrinnen-Erkennungssignale erzeugt und in die Steuer- oder Regeleinrichtung (5) einsteuert,
c) wenigstens einen von der Steuer- oder Regeleinrichtung (5) abhängig von den erfassten Fahrzeugumgebungsparametern gesteuerten oder geregelten Aktuator (9), welcher die Spurführung des Fahrzeugs beeinflusst, wobei
d) die Steuer- oder Regeleinrichtung (5) ausgebildet ist, dass sie den wenigstens einen Aktuator (9) abhängig von den Spurrinnen-Erkennungssignalen steuert oder regelt, **dadurch gekennzeichnet, dass**
e) das Spurführungssystem (4) einen Spurrinnenfolge-Modus aufweist, und dass
f) die Steuer- oder Regeleinrichtung (5) weiterhin ausgebildet ist, dass sie im Spurrinnenfolge-Modus den wenigstens einen Aktuator (9) bei einem Empfang von Spurrinnen-Erkennungssignalen derart steuert oder regelt, dass das Fahrzeug (100) der wenigstens einen erkannten Spurrinne (10, 11) folgt, indem wenigstens zwei Räder an wenigstens einer Fahrzeugseite in Überdeckung mit der wenigstens einen erfassten Spurrinne (10, 11) gebracht werden.

7. Spurführungssystem nach Anspruch 6, **dadurch gekennzeichnet, dass** es ausgebildet ist, dass für den Fall, dass von der Sensoreinrichtung (6) keine Spurrinnen-Erkennungssignale erzeugt worden sind und/oder in einem von dem Spurrinnenfolge-Modus abweichenden Modus des Spurführungssystems (4) die Steuer- oder Regeleinrichtung (5) den wenigstens einen Aktuator (9) derart steuert, dass die automatische Spurführung des Fahrzeugs (100) auf der Basis von durch die Sensoreinrichtung (6) erfassten Fahrzeugumgebungsparametern vornimmt, welche sich von einer erkannten Spurrinne (10, 11) unterscheiden.

8. Spurführungssystem nach Anspruch 6 oder 7, **dadurch gekennzeichnet, dass** es ausgebildet ist, dass für den Fall, dass von der Sensoreinrichtung (6) zwei im wesentlichen parallele Spurrinnen innerhalb einer Fahrspur (2) erkannt worden sind, nämlich eine erste Spurrinne (10) und eine zweite Spurrinne (11), und entsprechende Spurrinnen-Erkennungssignale in die Steuer- oder Regeleinrichtung (5) eingesteuert worden sind, die Steuer- oder Regeleinrichtung (5) den wenigstens einen Aktuator (9) derart steuert, dass das Fahrzeug (100) den beiden erkannten Spurrinnen (10, 11) folgt, indem wenigstens zwei Räder auf einer ersten Fahrzeugseite in Überdeckung mit der ersten erkannten Spurrinne (10) und wenigstens zwei Räder auf der zweiten Fahrzeugseite in Überdeckung mit der zweiten erkannten Spurrinne (11) gebracht werden.

9. Spurführungssystem nach einem der Ansprüche 6 bis 8, **dadurch gekennzeichnet, dass** die Steuer- oder Regeleinrichtung (5) ausgebildet ist, dass sie den wenigstens einen Aktuator (9) bei einem Empfang von Spurrinnen-Erkennungssignalen derart steuert oder regelt, dass das Fahrzeug (100) nur dann der wenigstens einen erkannten Spurrinne (10, 11) folgt, wenn die Sensoreinrichtung (5) erkannt hat, dass sich die wenigstens eine Spurrinne (10, 11) innerhalb einer Fahrspur (2) befindet und das Fahrzeug (100) sich beim Folgen der wenigstens einer Spurrinne (10, 11) innerhalb von Fahrspurbegrenzungen (7, 8) der Fahrspur (2) bewegt.

10. Spurführungssystem nach einem der Ansprüche 6 bis 9, **dadurch gekennzeichnet, dass** die Sensoreinrichtung (5) ausgebildet ist, dass sie eine nasse Fahrbahn erkennen und entsprechende Nass-Erkennungssignale in die Steuer- oder Regeleinrichtung (5) einsteuern kann, wobei die Steuer- oder Regeleinrichtung (5) ausgebildet ist, dass sie den wenigstens einen Aktuator (9) bei einem gleichzeitigen Empfang von Nass-Erkennungssignalen und von Spurrinnen-Erkennungssignalen derart steuert oder regelt, dass das die Räder des Fahrzeugs (100) einen Versatz gegenüber der (den) erkannten Spurrinne(n) (10, 11) aufweisen.

11. Spurführungssystem nach einem der Ansprüche 6 bis 10, **dadurch gekennzeichnet, dass** der Aktuator (9) eine Lenkeinrichtung und/oder eine Bremseinrichtung des Fahrzeugs umfasst.

12. Spurführungssystem nach einem der Ansprüche 6 bis 11, **dadurch gekennzeichnet, dass** die Sensoreinrichtung (6) eine Bilderfassungseinrichtung mit wenigstens einer Kamera umfasst.

13. Spurführungssystem nach einem der Ansprüche 6 bis 12, **dadurch gekennzeichnet, dass** es ausgebildet ist, dass es eine teilautonome oder autonome Spurführung des Fahrzeugs (100) ausführt.

14. Spurführungssystem nach einem der Ansprüche 6 bis 13, **dadurch gekennzeichnet, dass** der Spurrinnenfolge-Modus unter mehreren Modi zur Spurführung des Fahrzeugs (100) auswählbar ist.

15. Fahrzeug (100), **dadurch gekennzeichnet, dass** es ein Spurführungssystem (4) nach einem der Ansprüche 6 bis 13 aufweist.
